# EUROPEAN PATENT SPECIFICATION

(11) **EP 0 403 160 B1**
(45) Date of publication and mention of the grant of the patent: **22.09.1993**
(21) Application number: 90306217.2
(22) Date of filing: 07.06.1990
(51) Int. Cl.: B29B 7/24, B29B 7/18

(54) **Internal mixer**
Innenmischer
Mélangeur interne

(30) Priority: 13.06.1989 JP 150044/89
(43) Date of publication of application: 19.12.1990
(73) Proprietor: SUZUKA ENGINEERING CO. LTD., Yokkaichi-shi, Mie (JP)
(72) Inventor: Yada, Yasuo c/o Suzuka Engineering Co Ltd, Yokkaichi-shi Mie (JP)
(74) Representative: Allam, Peter Clerk

(56) References cited:
- DE-C- 3 426 442
- GB-A- 852 173
- PATENT ABSTRACTS OF JAPAN, vol. 12, no. 222 (M-712)[3069], 24th June 1988; & JP-A-63 19 207 (MITSUBISHI HEAVY IND. LTD) 27-01-1988
- PATENT ABSTRACTS OF JAPAN, vol. 12, no. 222 (M-712)[3069], 24th June 1988; & JP-A-63 19 206 (MITSUBISHI HEAVY IND. LTD) 27-01-1988
- PATENT ABSTRACTS OF JAPAN, vol. 12, no. 218 (M-711)[3065], 22nd June 1988; & JP-A-63 17 008 (MITSUBISHI HEAVY IND. LTD) 25-01-1988

## Description

This invention relates to an internal mixer provided with a mixing chamber for the materials to be mixed. Internal mixers are used for mixing various materials such as rubber, plastics, ceramics and the like.

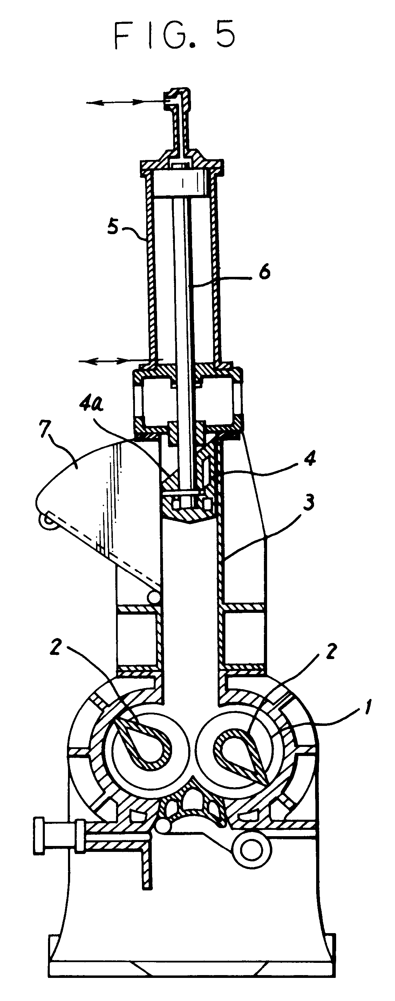

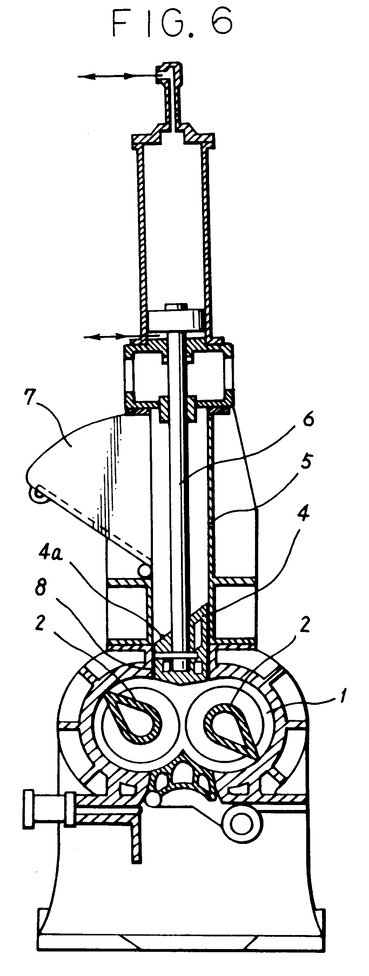

A typical example of a known internal mixer is shown in Figs. 5 and 6 of the accompanying drawings. The illustrated prior art internal mixer has two mixing rotors 2 which are connected to a drive source, not shown, and rotatably accommodated in a mixing chamber 1 in fluid tight condition. A floating weight 4 is vertically movably fitted in a hopper frame 3 which is extended upward from the mixing chamber 1. The floating weight 4 is suspended on the distal end of a piston rod 6 which is extended downward from an air cylinder 5 for moving the floating weight 4 up and down with pneumatic pressure. When the floating weight 4 is in the upper lifted position as shown in Fig. 5 (in a non-mixing stage), the mixing chamber 1 is open to receive a charge of mixing material from a charge hopper 7 mounted on the hopper frame 3. On the other hand, when the floating weight 4 is in the lower position as shown in Fig. 6 (in a mixing stage), the mixing chamber 1 is closed off from the hopper 7, while the floating weight 4 is pushed against the charged material in the mixing chamber 1 by pneumatic pressure, applied through the piston rod 6, and caused to float up and down repeatedly according to the movements of the charged material which is being mixed by the rotors 2. Such upward and downward floating or sinking actions of the floating weight 4 accelerate the mixing of the charged material.

However, the illustrated prior apparatus suffers from a number of disadvantages which it would be desirable to avoid or at least minimise. For instance, moving the floating weight 4 up and down rapidly eg at a frequency of more than one time per minute, as may be required eg in a tyre manufacturing plant, involves the consumption of a large quantity of compressed air, which can become extremely uneconomical. Further, in a case where a high pressure is to be applied to the mixing material through the floating weight 4 in an initial stage of the mixing operation for the purpose of producing accelerated mixing effects, difficulties are encountered in carrying out the operation in an efficient and economical manner because it takes time to build up the high pressure due to the effect of the compressibility of air in an air cylinder of a large capacity, even though the supply of compressed air is increased.

There has been yet another problem with this prior apparatus, and that is that the mixing material erupts into upper portions of the hopper frame 3 through the clearance around the floating weight 4 and deposits on the upper surface of the floating weight 4. Therefore, in order to ensure that the entire amount of the charged material be mixed and dispersed in final product, the deposited powder has to be swept into the mixing chamber 1 at predetermined time intervals. This, however, is very troublesome from the standpoint of machine operation. For instance, in the conventional batch type internal mixer, the powder which has been blown up in the mixing stage and deposited on the upper surface of the floating weight needs to be swept off the weight and back into the mixing chamber by lifting up the floating weight one or more times before completion of the mixing operation for each batch, which of course prolongs the mixing time.

German Patent 3426442 describes an internal mixer with a floating weight which is moved between the upper lifted position and the lower pressing position by lift means which comprises a fluid-operated piston-cylinder mechanism, the cylinder being formed internally of the floating weight. The lift means is also employed to press the floating weight against the material in the mixing chamber during mixing. The floating weight comprises a hollow cylinder with a relatively wider charging ram at the lower end thereof.

It is the object of the present invention to provide an improved internal mixer.

The internal mixer of the present invention comprises:

a mixing chamber,

a mixing rotor in said mixing chamber,

a vertically oriented hopper frame extending upwards from said mixing chamber,

a charge hopper provided to one side of said hopper frame and communicating with said mixing chamber through an opening in the side wall of said hopper frame, and

a floating weight movable in said hopper frame between an upper lifted position when charging material to be mixed from said charge hopper into said mixing chamber and a lower pressing position for applying pressure to material in said mixing chamber during mixing thereof,

characterized in that:

the floating weight is dimensioned such that it has an axial length sufficient for closing said opening when in its lowered position and such that an elongate clearance is formed between the hopper frame and the floating weight in its lowered position which causes mixing material entering thereinto to fall back therefrom under the action of gravity.

As the floating weight which is pressed against the charged material in the mixing chamber moves up and down during the mixing operation, air in the mixing chamber is repeatedly inhaled and exhaled through the annular clearance between the floating weight and hopper frame, often accompanied by inward and outward movements of powdery mixing material in the clearance. However, when in its lowered position, the axially relatively lengthy floating weight forms an elongated clearance along the inner wall of the hopper frame, so that as they flow through the clearance the pressure of these air jets becomes attenuated by frictional resistance to such a degree as to largely preclude scattering of the mixing material powder from the charge hopper. Consequently, midway along the clearance, the powdery mixing material tends to fall back by gravity without depositing on the upper surface of the floating weight.

Preferably the mixer includes lift means for lifting said floating weight from said lower position to said upper position, the lift means comprising a fluid-operated piston-cylinder mechanism in which said cylinder is formed internally of said floating weight.

By providing the fluid-operated piston-cylinder mechanism of the lift means for the floating weight internally within the floating weight itself, it becomes possible to reduce the height of the mixer as a whole, as compared with a conventional internal mixer of the type illustrated in Figs. 5 and 6 hereof, so that the installation space required by the mixer reduced quite considerably. Furthermore, this arrangement readily permits the adoption of simple expedients for preventing powdery mixing material from depositing on the upper surfaces of the floating weight, as will be described in more detail below.

The internal mixer of this invention preferably also provides means for pressing the floating weight resiliently against material in the mixing chamber during a stage of mixing. The piston-cylinder mechanism of the lift means for the floating weight may be adapted so as to additionally serve the function of providing these pressing means, but we prefer to provide pressing means which are separate from the lift means.

More particularly, in the preferred embodiment of the present invention, the pressing means comprises a pneumatically-operated piston-cylinder mechanism which is operable to apply varying levels of pressing force to the floating weight, whilst the separate piston-cylinder mechanism of the lift means is hydraulically operated. With this arrangement there is no need for discharging the compressed air on each lifting operation as is the case in the conventional mixer shown in Figs. 5 and 6. This is more economical and, thanks to the use of hydraulic pressure which is free of the problem of compressibility, contributes to improving the efficiency of the mixer as it permits prompt application of high pressure in a case where the mixing material is to be pressed with high pressure in an initial stage of the mixing operation.

The pressing means which presses the floating weight against the mixing material advantageously may comprise a pneumatic cylinder with a short stroke length, which is mounted above the lift means and which has its piston rod linked with the piston rod of the hydraulic lift cylinder. In this instance, it is desirable to link the two piston rods through an universal joint which is capable of absorbing vibrations.

For the purpose of more reliably preventing powdery mixing material from erupting into the chamber behind the floating weight, it is desirable to provide a dust seal for sliding contact with the floating weight above the hopper opening in the side wall of the hopper frame.

In this case, eruptions of powdery mixing material into the chamber behind the floating weight can be prevented even more securely by connecting the chamber behind the floating weight to a pressurized air source to maintain the internal pressure of the chamber at a level higher than that within the mixing chamber. Further, this back pressure chamber may be connected to a dust collector so that compressed air is discharged from the back pressure chamber through the dust collector to remove dust from it at the time of lifting up the floating weight.

Furthermore, it is desirable to provide a liquid collecting means in order to prevent leaked operating liquid of the hydraulic lift cylinder from coming into contact with the mixing material. Such a liquid collecting means may be constituted by a liquid collecting groove and a liquid sink formed side-by-side on the top surface of the floating weight to collect pressurized operating liquid leaking from the lift cylinder, a suction nozzle so located in the hopper frame as to be plunged into the sink when the floating weight is elevated to the upper position in the hopper frame and connected through a solenoid valve to a liquid separation vessel maintained constantly at a reduced pressure by means of a vacuum pump, a sensor for detecting the elevation of the floating weight to its upper lifted position, and a control unit adapted to open the solenoid valve in response to a floating weight detection signal from the sensor.

The invention will now be described further with reference to the accompanying drawings, in which:
Fig. 1 is a sectional view of one preferred embodiment of an internal mixer of the present invention, showing the mixer in a non-mixing stage;
Fig. 2 is a view similar to Fig. 1 but showing the mixer in a mixing stage;
Fig. 3 is a sectional view on an enlarged scale of major components of the internal mixer, with means for collecting leaked operating liquid;
Fig. 4 is a sectional view of an internal mixer of another embodiment of the invention, showing the mixer in a non-mixing stage;
Fig. 5 is a sectional view of a conventional prior art internal mixer in a non-mixing stage; and
Fig. 6 is a view similar to Fig. 5 but showing the mixer in a mixing stage.

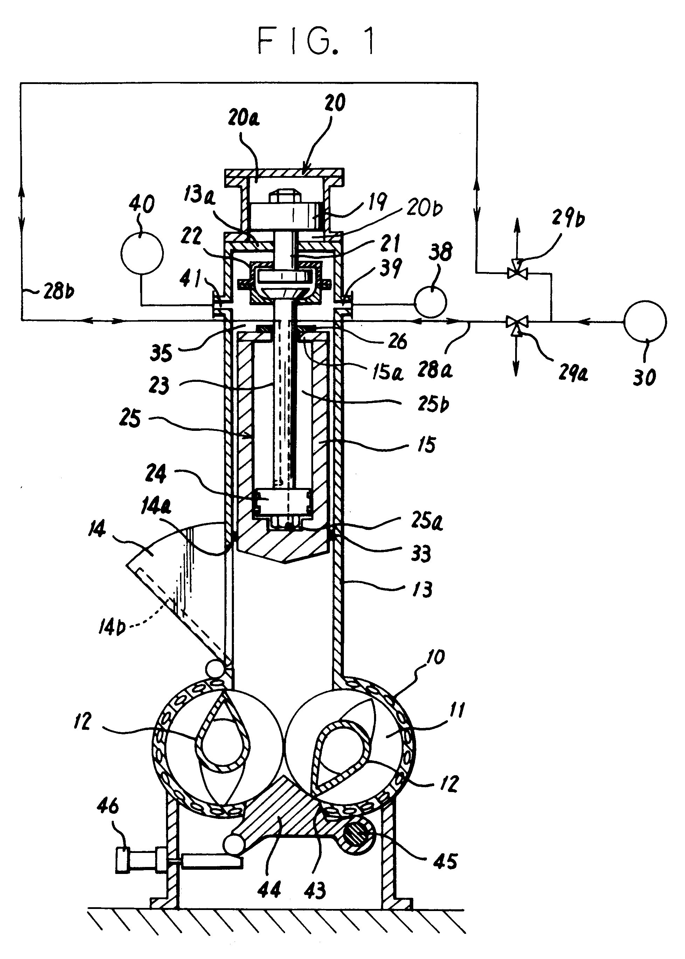

Referring first to Fig. 1, indicated at 10 is a housing which internally defines a mixing chamber 11, and at 12 are a pair of mixing rotors which are rotatably received in the mixing chamber 11 and rotationally driven from a driven source which is not shown. The casing 10 is provided with a hopper frame 13 rising upward from the mixing chamber 11. A charge hopper 14 for charging material to be mixed in the mixing chamber 11 opens laterally into a lower end portion of the hopper frame 13 through an opening 14a having a door 14b.

A floating weight 15 is fitted in the hopper frame 13 for upward and downward movements therein. The floating weight 15 is lifted up when charging a mixing material such as rubber, plastics, ceramics or the like into the mixing chamber 11, and then lowered and pressed against the charged material while the latter is being mixed by the mixing rotors 12.

The mixer of this illustrated embodiment of the invention employs two separate fluid cylinders, one serving as a lift means with a large stroke length for lifting the floating weight up and down, and the other serving as a pressing means with a short stroke length for pressing the floating weight resiliently against the charged material in the mixing chamber 11. More particularly, the mixer employs a pneumatic cylinder mechanism as the pressing means, including a pressing cylinder 20 mounted on top of the hopper frame 13, a piston 19 slidably received in the cylinder 20 and a first piston rod 21 having the upper end thereof connected to the piston 19 and the lower end extended downward into the hopper frame 13 hermetically through a partition wall 13a. On the other hand, a hydraulic cylinder mechanism constitutes the lift means and this includes a lift cylinder 25 formed internally of the floating weight 15, a piston 24 slidably received in the cylinder 25, and a second piston rod 23 having the lower end thereof connected to the piston 24 and the upper end extended upward into the hopper frame 13 through top wall 15a of the floating weight 15 in liquid tight state. The first and second piston rods 21 and 23 are linked to each other through a vibration absorbing universal joint 22. Denoted at 26 is a seal member for the second piston rod 23, as it passes through the top wall 15a of the floating weight.

One advantage of the illustrated internal mixer will already be apparent, and that is that the hydraulic lift cylinder, which is of a relatively long stroke length, is formed internally of the floating weight 15 which is received in the hopper frame 13, so that the mixer can be reduced in height and size to a marked degree as compared with a mixer such as illustrated in Figs. 5 and 6 and which has its lift cylinder mounted on the upper end of the hopper frame.

The head and rod chambers 25a and 25b of the lift cylinder 25 are connected to a pressurized liquid source 30 via pipes 28a and 28b and through change-over valves 29a and 29b, such that the pressurized liquid is supplied selectively to and from the two chambers by switching the valves 29a and 29b, to move the floating weight 15 up and down within the hopper frame 13.

Head chamber 20a of the pressurizing cylinder 20 is supplied with compressed air of a predetermined pressure in order to press the floating weight 15 against the mixing material during a mixing stage. Due to the compressibility of air, the floating weight 15 is permitted to float up and down according to the movements of the material being mixed in the mixing chamber 11.

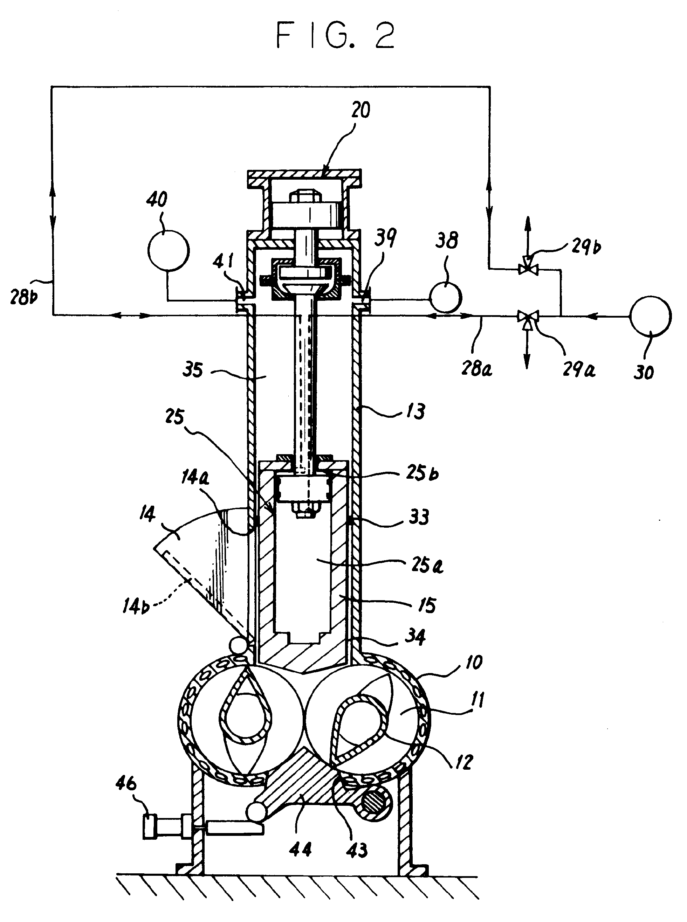

The floating weight 15 is so formed as to have an axial length which is sufficient for closing the opening 14a of the charge hopper 14 in the side wall of the hopper frame 13 when the floating weight 15 is in the lowered, pressing position (Fig. 2). Above the hopper opening 14a, a dust seal 33 is provided on the inner surface of the hopper frame 13 for sliding contact with the floating weight 15. Accordingly, an annular clearance 34 of a long length is formed between the floating weight 15 and the dust seal 33 in the mixing stage, which in cooperation with the dust seal 33 helps to prevent material erupting from the mixing chamber 11 from reaching the pressure chamber 35 behind the floating weight 15 and thence depositing on the upper surface of the floating weight 15.

Further, the back pressure chamber 35 is provided with an air feed nozzle 39 which is in communication with a pressurized air source 38 such as a blower or the like, and an air exhaust nozzle 41 which is in communication with a dust collector 40. Pressurized air is fed to the back pressure chamber 35 when the floating weight 15 is lowered in the mixing stage, thereby maintaining the back pressure chamber 35 at a higher pressure than the mixing chamber 11, to help block the entry of mixing material powder into the back pressure chamber 35 past the dust seal 33.

In a non-mixing stage of the operation, the floating weight 15 is lifted up and the pressurized air in the back pressure chamber 35 is discharged through the air exhaust nozzle 41 into the dust collector 40 to remove dust from the exhaust air.

An outlet 43 is provided on the lower side of the housing 10 for ejecting the mixed product therethrough, the outlet 43 being normally closed by a drop door 44 which is pivotable about a shaft 45 and operated into its open or closed positions by an actuator (not shown) which is mounted on the housing 10. When closed, the door 44 is locked in that position by a lock cylinder 46.

An internal mixer of the above-described construction can be operated to mix a material in the following way. Firstly, pressurized liquid is supplied to the rod chamber 25b of the lift cylinder 25 in order to cause the floating weight 15 to be lifted up into the position shown in Fig. 1, and then the material to be mixed is charged into the mixing chamber 11 through the charge hopper 14. Preferably at this time compressed air is supplied to the rod chamber 20b of the pressurizing cylinder 20 to hold the piston 19 in the lifted position.

Next, with the piston 19 still held in the lifted position, pressurized liquid is supplied to the head chamber 25a of the lift cylinder 25 to lower the floating weight into the position shown in Fig. 2. In this stage, the first stage mixing operation is carried out, with the floating weight pressing against the mixing material in the mixing chamber 11 as a result of the liquid pressure in head chamber 25a and without any cushioning effect.

On conclusion of the first stage of mixing, compressed air is supplied to the head chamber 20a of the pressurizing cylinder 20 in order to lower the piston 19, and the liquid pressure in the lift cylinder 25 is adjusted, if necessary. Now the floating weight 15 presses against the mixing material resiliently while the charge material is mixed by the rotors. That is to say, due to the compressibility of the air in the head chamber 20a, the floating weight 15 is permitted to float up and down according to the movements of the mixing material in the mixing chamber 11, thereby accelerating the mixing of the charged material.

With the upward and downward floating actions of the weight 15, air in the mixing chamber 11 is pushed into the annular clearance 34 between the floating weight 15 and hopper frame 13 and then sucked into the mixing chamber 11 again. This in turn can cause eruptions of powdery mixing material into the clearance 34.

However, when it is in its lowered position, the floating weight 15, having as it does an axial length which is sufficient for closing the opening 14a of the hopper 14 at one side of the hopper frame 13, forms a lengthy clearance 34 along the inner wall surface of the hopper frame 13. Accordingly, the pressure of erupting air is attenuated abruptly by frictional resistance while flowing through the clearance 34, so that powder entrained in the erupting air tends to fall by gravity midway of the clearance and return to the mixing chamber 11 as the erupted air is sucked back again by an upward movement of the floating weight 15. In addition, since the back pressure chamber behind the floating weight 15 and the clearance 34 are shielded from each other by the dust seal 33 on the hopper frame 13, there is little or no possibility of the powder reaching the back pressure chamber 35 and depositing on the upper surface of the floating weight 15.

Any risk of powder reaching the chamber 35 can be reduced still further in the mixing stage, by supplying pressurized air from the pressurized air source 38 to the back pressure chamber 35 through the air feed nozzle 39, so as to maintain the internal pressure of the chamber 35 at a level higher than that of the mixing chamber 11.

Upon completion of the mixing operation the drop door 44 is opened by its actuator to discharge the mixed product through the outlet 43. Then, the floating weight 15 is lifted up by the lift cylinder 25 to permit charging of the next batch of mixing material. As the floating weight 15 is elevated, any powder deposited on the side wall of the hopper frame is scraped off by the dust seal 33, while the air in the back pressure chamber 35 is exhausted through the air exhaust nozzle 41. Dust in the exhaust air is separated and collected by the dust collector 40. The charging of the next batch of material into the mixing chamber 11 whilst the floating weight 15 is elevated can be completed promptly by pre-charging the material into the hopper 14 whilst the mixing of the previous batch is being carried out.

If desired, the mixer may be arranged to invert the mixing chamber 11 upside down at the time of discharging the mixed product. In such a case, it becomes possible to prevent deposition of the mixing material powder on the upper surface of the floating weight 15, and thus to preclude the pollution of the working environment with dust.

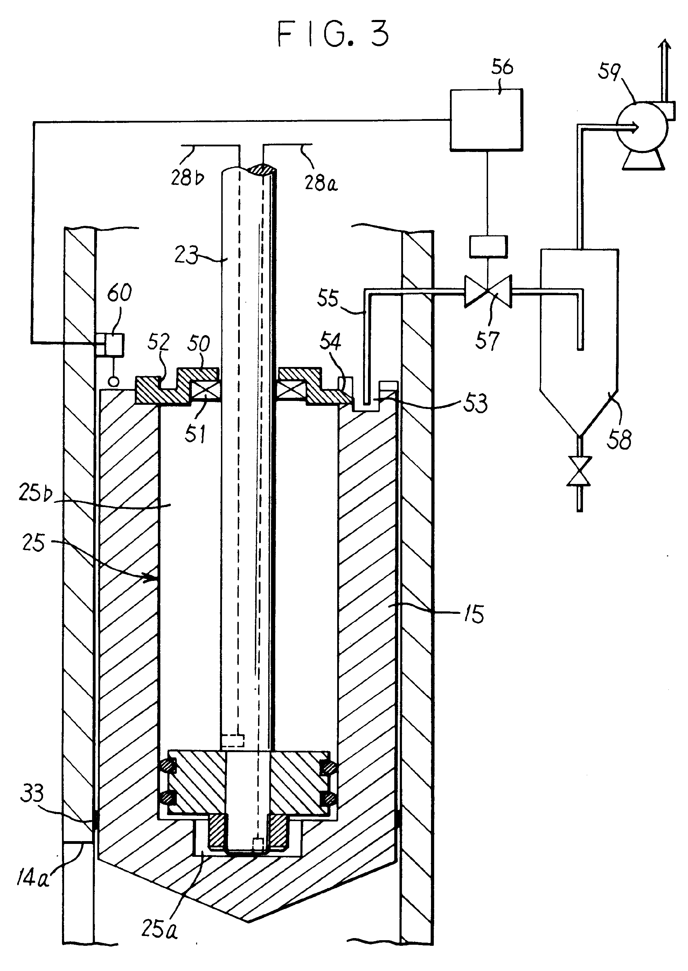

It is preferred that the mixer should be provided with a suitable liquid collecting means for collecting any pressurized operating liquid which leaks from the lift cylinder 25 of the hydraulic cylinder mechanism through the seal portion of the second piston rod 23. An example of such an operating liquid collecting means is shown in Fig. 3.

In Fig. 3, a seal holder 50 is mounted on top of the floating weight 15 in such a manner as to embrace an oil seal gasket 51, the seal holder 50 being provided with a liquid collecting groove 52 on its top surface around the second piston rod 23 to receive operating liquid which leaks from the oil seal gasket 51. A sink 53 which is formed at one side of the liquid collecting groove 52 communicates with the groove 52 through a passage 54. Provided internally of the back pressure chamber 35 is a suction nozzle 55 which is located in such a position that the fore end of the nozzle is plunged into the sink 53 when the floating weight 15 is lifted to the upper position, for sucking the operating liquid out of the sink 53. The suction nozzle 55 is connected to the liquid separation vessel 58 through a solenoid valve 57 which is opened and closed by a control unit 56. A liquid separation vessel 58 is connected to a vacuum pump 59 so as to be constantly maintained in a reduced pressure condition. A sensor 60, such as a limit switch or the like, is provided within the back pressure chamber 35 to detect the elevation of the floating weight 15 to the upper lifted position. The output signal of the sensor 60 is supplied to the control unit 56.

Accordingly, if the elevation of the floating weight 15 to the upper lifted position is detected by the sensor 60 in a non-mixing stage of the operation, the control unit 56 opens the solenoid valve 57 in response to the detection signal from the sensor 60 to suck the operating liquid out of the sink 53 through the suction nozzle 55. In this way leaked operating liquid is collected in each cycle of operation.

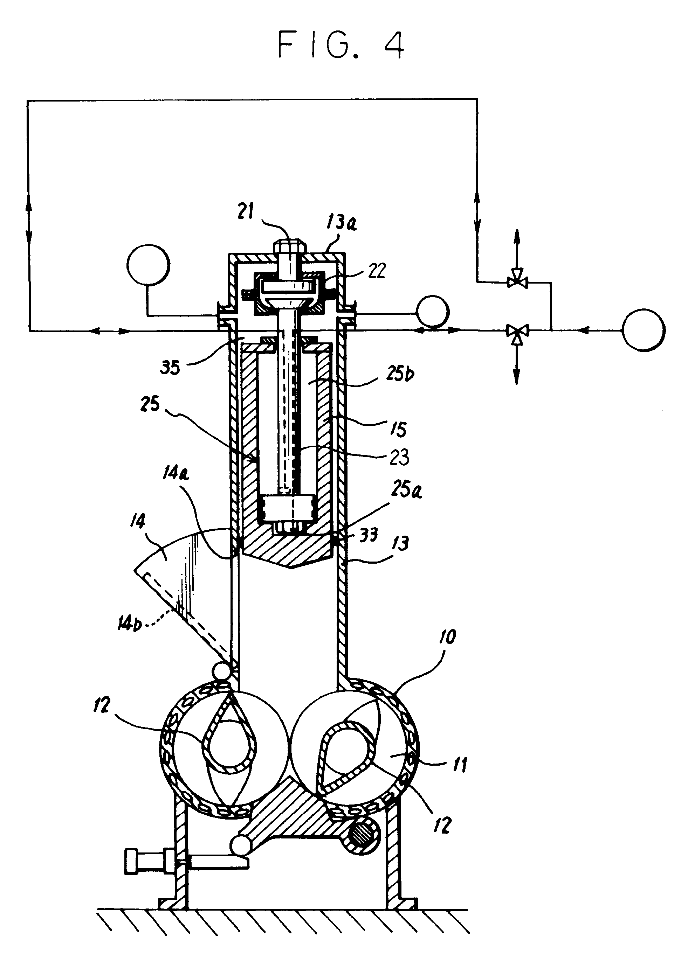

Although in the foregoing embodiment the vertical lift means for the floating weight is provided separately from the pressing means which presses the floating weight against the mixing material this is not essential. For example, the lift cylinder may be arranged to serve for both of the lifting and pressing operations, i.e. omitting the separate pressing cylinder, as illustrated in the embodiment shown in Fig. 4. In the embodiment of Fig. 4, the first piston rod 21 is extended downward into the hopper frame 13 from a partition wall 13a at the top end of the hopper frame 13, and compressed air is used as an operating fluid for the lift cylinder 25 in both lifting and pressing operations. Alternatively, a pressurized liquid may be used in place of compressed air if desired. In this case, the floating weight can be resiliently pressed against the mixing material by providing a buffer circuit, which confines an inert gas, within the length of the operating liquid supply circuit.

In other respects, the mixer of Fig. 4 is substantially the same as the embodiment of Figs. 1-3 in construction and operation. Common component parts are designated by common reference numerals or characters, and their description is omitted to avoid unnecessary repetition.

## Claims

1. An internal mixer, comprising:
a mixing chamber (11),
a mixing rotor (12) in said mixing chamber,
a vertically oriented hopper frame (13) extending upwards from said mixing chamber,
a charge hopper (14) provided to one side of said hopper frame (13) and communicating with said mixing chamber (11) through an opening (14a) in the side wall of said hopper frame (13), and
a floating weight (15) movable in said hopper frame (13) between an upper lifted position when charging material to be mixed from said charge hopper (14) into said mixing chamber (11) and a lower pressing position for applying pressure to material in said mixing chamber (11) during mixing thereof,
characterized in that:
the floating weight (15) is dimensioned such that it has an axial length sufficient for closing said opening (14a) when in its lowered position and such that an elongate clearance is formed between the hopper frame (13) and the floating weight in its lowered position which causes mixing material entering thereinto to fall back therefrom under the action of gravity.

2. An internal mixer, according to Claim 1, further comprising lift means (23-25) for lifting said floating weight (15) from said lower position to said upper position, wherein said lift means comprises a fluid-operated piston-cylinder mechanism (23-25) in which said cylinder (25) is formed internally of said floating weight (15).

3. An internal mixer according to either Claim 1 or Claim 2, wherein pressing means (23-25; 19-21) are provided for pressing said floating weight (15) resiliently against material in said mixing chamber (11) during a stage of the mixing.

4. An internal mixer according to Claim 3 when dependent on Claim 2, wherein said pressing means (19-21) are separate from said lift means (23-25).

5. An internal mixer according to Claim 3 when dependent on Claim 2, wherein said lift means (23-25) is adapted to function also as said pressing means.

6. An internal mixer according to any one of Claims 2 to 5, wherein said piston-cylinder mechanism (23-25) of said lift means is hydraulically operated and comprises said cylinder (25) extending substantially vertically within said floating weight (15), a piston (24) slidably received in said cylinder (25), and a piston rod (23) extended upward from said piston (24) and through a liquid tight seal in the upper end of said cylinder (25).

7. An internal mixer according to Claim 6 when dependent on Claim 4, wherein said pressing means comprises a pneumatically operated piston-cylinder mechanism (19-21) operable to apply varying levels of pressing force to said floating weight (15).

8. An internal mixer according to Claim 7, wherein said piston rod (23) of said hydraulically operated piston-cylinder mechanism (23-25) is linked to said piston rod (21) of said pneumatically operated piston-cylinder mechanism (19-21) which is mounted above said hydraulically operated piston-cylinder mechanism, said piston rod (21) of said pneumatically operated piston-cylinder mechanism (19-21) extending hermetically through the lower end of the piston (19) of said mechanism.

9. An internal mixer according to Claim 8, wherein said piston rods (21,23) are linked to each other through a vibration-absorbing universal joint (22).

10. An internal mixer according to any preceding Claim, wherein a seal member (33) is provided on the inner wall of said hopper frame (13) above said opening (14a) for sliding engagement with said floating weight (15) to block the upward passage of material from said mixing chamber (11).

11. An internal mixer according to any preceding Claim, wherein a back pressure chamber (35) is formed above said floating weight (15) in said hopper frame (13), said back pressure chamber (35) being connectible to a pressurized air source to maintain an internal pressure therein higher than that in said mixing chamber (11).

12. An internal mixer according to Claim 11, wherein said back pressure chamber (35) is connected to a dust collector (40) for collecting dust in exhaust air discharged from said back pressure chamber (35) as said floating weight (15) is raised towards its upper lifted position.

13. An internal mixer according to any one of Claims 6 to 12, further comprising means (52-60) for collecting pressurized operating liquid which has leaked from said hydraulic lift cylinder (25).

14. An internal mixer according to Claim 13, wherein said liquid collecting means comprises a liquid collecting groove (52) and a sink (53) formed on the upper surface of said floating weight (15) for collecting and pooling operating liquid which has leaked from said lift cylinder (25), a suction nozzle (55) mounted in such a position as to be dipped into said sink (53) when said floating weight (15) is lifted into its upper position and connected through a solenoid valve (57) to a liquid separation vessel (58) constantly maintained at a reduced pressure by a vacuum pump (59), a sensor (60) for detecting the arrival of said floating weight at said upper lifted position, and a control unit (56) adapted to open said solenoid valve (57) in response to a detection signal from said sensor (60).

## Patentansprüche

1. Innenmischer, mit:
einer Mischkammer (11),
einem Mischrotor (12) in der Mischkammer,
einem vertikal orientierten Fülltrichter-Rahmen (13), der sich von der Mischkammer nach oben erstreckt,
einem Beschickungs-Fülltrichter (14), der an einer Seite des Fülltrichter-Rahmens (13) vorgesehen ist und mit der Mischkammer (11) durch eine in der Seitenwand des Fülltrichter-Rahmens (13) befindlichen Öffnung (14a) kommuniziert, und einem Schwinmmgewicht (15), das in dem Fülltrichter-Rahmen (13) beweglich ist zwischen einer oberen angehobenen Position, wenn zu mischendes Material von dem Beschickungs-Fülltrichter in die Mischkammer (11) eingebracht wird, und einer unteren Druckposition zum Zuführen von Druck auf das Material in der Mischkammer (11) während dessen Mischung,
dadurch gekennzeichnet,
daß das Schwimmgewicht (15) derart dimensioniert ist, daß es eine ausreichende axiale Länge zum Schließen der Öffnung (14a) aufweist, wenn es sich in seiner unteren Position befindet, und daß ein langgestreckter Raum zwischen dem Fülltrichter-Rahmen (13) und dem Schwimmgewicht in seiner unteren Position ausgebildet ist, welcher darin eintretendes Mischmaterial dazu bringt, von dort wegen der Gravitation zurückzufallen.

2. Innenmischer nach Anspruch 1, welcher weiterhin ein Anhebemittel (23-25) umfaßt zum Anheben des Schwimmgewichts (15) von der unteren Position zu der oberen Position, worin das Anhebemittel einen Flüssigkeits-betriebenen Kolben-Zylinder-Mechanismus (23-25) umfaßt, in welchem der Zylinder (25) innerhalb des Schimmgewichts (15) ausgebildet ist.

3. Innenmischer entweder nach Anspruch 1 oder Anspruch 2, bei dem ein Druckmittel (23-25; 19-21) zum federnden Drücken des Schwimmgewichts (15) gegen das Material in der Mischkammer (11) während der Mischungsstufe vorgesehen ist.

4. Innenmischer nach Anspruch 3, wenn abhängig von Anspruch 2, worin das Druckmittel (19-21) von dem Anhebemittel (23-25) getrennt ist.

5. Innenmischer nach Anspruch 3, wenn abhängig von Anspruch 2, worin das Anhebemittel (23-25) angepaßt ist, um ebenfalls als Druckmittel zu funktionieren.

6. Innenmischer nach einem der Ansprüche 2 bis 5, worin der Kolben-Zylinder-Mechanismus (23-25) des Anhebemittels hydraulisch betrieben wird und den Zylinder (25), welcher sich im wesentlichen vertikal innerhalb des Schwimmgewichts (15) erstreckt, einen Kolben (24), welcher verschiebbar in dem Zylinder (25) aufgenommen ist, und eine Kolbenstange (23) umfaßt, welche von dem Kolben (24) nach oben und durch eine Flüssigkeits-feste Dichtung in dem oberen Ende des Zylinders (25) ausgedehnt ist.

7. Innenmischer nach Anspruch 6, wenn abhängig von Anspruch 4, worin das Druckmittel einen pneumatisch betriebenen Kolben-Zylinder-Mechanismus (19-21) umfaßt, welcher betreibbar ist, um dem Schwimmgewicht (15) verschiedene Level an Druckkraft zuzuführen.

8. Innenmischer nach Anspruch 7, worin die Kolbenstange (23) des hydraulisch betriebenen Kolben-Zylinder-Mechanismus (23-25) mit der Kolbenstange (21) des pneumatisch betriebenen Kolben-Zylinder-Mechanismus (19-21) verbunden ist, welcher oberhalb des hydraulisch betriebenen Kolben-Zylinder-Mechanismus montiert ist, wobei sich die Kolbenstange (21) des pneumatisch betriebenen Kolben-Zylinder-Mechanismus (19-21) hermetisch durch das untere Ende des Kolbens (19) von diesem Mechanismus erstreckt.

9. Innenmischer nach Anspruch 8, worin die Kolbenstangen (21,23) durch eine Vibrationen absorbierende Universalverbindung (22) untereinander verbunden sind.

10. Innenmischer nach einem der vorhergehenden Ansprüche, worin ein Abdichtungsmittel (33) auf der inneren Seite des Fülltrichter-Rahmens (13) oberhalb der Öffnung (14a) für ein verschiebbares Eingreifen mit dem Schwimmgewicht (15) vorgesehen ist, um eine Aufwärtsbewegung des Materials aus der Mischkammer (11) zu blockieren.

11. Innenmischer nach einem der vorhergehenden Ansprüche, worin in dem Fülltrichter-Rahmen (13) oberhalb des Schwimmgewichts (15) eine Gegendruckkammer (35) ausgebildet ist, welche mit einer unter Druck gesetzten Luftquelle verbindbar ist, um darin einen Innendruck aufrechzuerhlten, welcher größer als derjenige in der Mischkammer (11) ist.

12. Innenmischer nach Anspruch 11, worin die Gegendruckkammer (35) an einem Staubfänger (40) befestigt ist, um Staub in der Abluft zu sammeln, welche von der Gegendruckkammer (35) abgegeben wird, wenn das Schwimmgewicht (15) in Richtung der oberen angehobenen Position hochgehoben wird.

13. Innenmischer nach einem der Ansprüche 6 bis 12 , welcher weiterhin Mittel (52-60) zum Aufsammeln der unter Druck gesetzten Betriebsflüssigkeit umfaßt, welche aus dem hydraulischen Anhebzylinder (25) ausgelaufen ist.

14. Innenmischer nach Anspruch 13, worin das Flüssigkeits-aufsammelnde Mittel eine Flüssigkeits-aufsammelnde Kerbe (52) und einen Abzugskanal (53), welcher auf der oberen Oberfläche des Schwimmgewichts (15) ausgebildet ist zum Aufsammeln und Zusammenfassen des Betriebsflüssigkeit, welche aus dem Anhebzylinder (25) ausgelaufen ist,
eine Saugdüse (55), die in solch einer Position angeordnet ist, daß sie in den Abzugskanal (53) eingetaucht werden kann, wenn das Schwimmgewicht (15) in seine obere Position angehoben wird, und die durch ein Magnetventil (57) mit einem Gefäß zur Flüssigkeitstrennung (58) verbunden ist, welches durch eine Vakuumpumpe (59) auf einem reduzierten Druck gehalten wird, einen Sensor (60) zum Anzeigen der Ankunft des Schwimmgewichts (15) an seiner oberen angehobenen Position und
eine Regeleinrichtung (56) umfaßt, welche geeignet ist, um das Magnetventil (57) in Beziehung zu einem Anzeigesignal von dem Sensor (60) zu öffnen.

## Revendications

1. Mélangeur intérieur, comportant:
une chambre de mélange (11),
un rotor mélangeur (12) dans ladite chambre de mélange,
un bâti porte-trémie (13) orienté en sens vertical vers le haut depuis ladite chambre de mélange,
une trémie de charge (14) prévue d'un côté dudit bâti porte-trémie (13) et communiquant avec ladite chambre de mélange (11) par une ouverture (14a) située dans la paroi latérale dudit bâti porte-trémie (13), et
un poids flottant (15) se déplaçant à l'intérieur dudit bâti porte-trémie (13) entre une position supérieure relevée au chargement de la matière à mélanger de ladite trémie de charge (14) dans ladite chambre de mélange (11) et dans une position inférieure d'appui pour mettre en charge la matière dans ladite chambre de mélange (11) lors du mélange,
caractérisé en ce que:
le poids flottant (15) comportent des dimensions dont la longueur est telle à boucher ladite ouverture (14a) en sa position inférieure et telle qu'un dégagement allongé est formé entre le bâti porte-trémie (13) et le poids flottant en position inférieure ce qui sous l'effet de la gravité provoque la retombée de la matière à mélanger destinée à la chambre de mélange.

2. Mélangeur intérieur selon la revendication 1, comportant également des moyens de levage (23025) pour soulever ledit poids flottant (15) de sa position inférieure à la position supérieure, lesdits moyens de levage comportant un vérin hydraulique à piston et cylindre (23-25) dont ledit cylindre (25) est pratiqué à l'intérieur dudit poids flottant (15).

3. Mélangeur intérieur selon la revendication 1 ou la revendication 2, dont les moyens de mise en charge (23-25; 19-21) sont assurés pour appuyer ledit poids flottant (15) en souplesse sur la matière dans ladite chambre de mélange (11) lors d'une phase du mélange.

4. Mélangeur intérieur selon la revendication 3 en fonction de la revendication 2, dont les moyens de mise en charge (19-21) sont séparés des moyens de levage (23-25).

5. Mélangeur intérieur selon la revendication 3 en fonction de la revendication 2, dont les moyens de levage sont également agencés pour fonctionner comme moyens de mise en charge.

6. Mélangeur intérieur selon l'une quelconque des revendications 2 à 5, dont le mécanisme vérin à piston et cylindre (23-25) desdits moyens de levage sont à commande hydraulique et comportent essentiellement l'extension verticale du cylindre (25) à l'intérieur du poids flottant (15), un piston (24) logé coulissant dans ledit cylindre (25), et une tige de piston (23) allongée vers le haut depuis ledit piston (24) au travers d'une garniture étanche au liquide à l'extrémité supérieure dudit cylindre (25).

7. Mélangeur intérieur selon la revendication 6 et en fonction de la revendication 4, dont lesdits moyens de mise en charge comportent un mécanisme à commande pneumatique (19-21) permettant l'application audit poids flottant (15) de diverses forces de charge.

8. Mélangeur intérieur selon la revendication 7, dont ladite tige de piston (23) dudit mécanisme vérin piston et cylindre hydraulique (23-25) est raccordée à ladite tige de piston (21) dudit vérin pneumatique à piston et cylindre (19-21) monté au dessus dudit mécanisme vérin hydraulique à piston et cylindre, ladite tige de piston (21) dudit vérin pneumatique à piston et cylindre (19-21) étant allongé hermétique au travers de l'extrémité inférieure du piston dudit même mécanisme.

9. Mélangeur intérieur selon la revendication 8, dont lesdites tiges de piston (21,23) sont raccordées l'une à l'autre par un joint universel amortissant la vibration (22).

10. Mélangeur intérieur selon l'une quelconque des revendications précédentes, dans lequel un élément d'étanchéité (33) est prévu sur la paroi intérieure dudit bâti porte-trémie (13) au dessus de ladite ouverture (14a) permettant l'engagement coulissant avec ledit poids flottant (15) pour bloquer tout passage supérieur de matière depuis ladite chambre de mélange (11).

11. Mélangeur intérieur selon l'une quelconque des revendications précédentes, dans lequel une chambre de contre-pression (35) est formée au dessus du poids flottant (15) dans ledit bâti porte-trémie (13), ladite chambre de contre-pression (35) admettant le raccord à une source d'air comprimé pour y maintenir une pression intérieure supérieure à celle de la chambre de mélange (11).

12. Mélangeur intérieur selon la revendication 11, dans lequel ladite chambre de contre-pression (35) est raccordée à un extracteur de poussière(40) pour extraire la poussière retenue dans l'exhaure déchargée par ladite chambre de contre-pression (35) lorsque ledit poids flottant (15) est soulevé en sa position supérieure de levage.

13. Mélangeur intérieur selon l'une quelconque des revendications 6 à 12, comportant également des moyens (52-60) de collecte de liquide sous pression provenant de fuites dudit cylindre hydraulique de levage (25).

14. Mélangeur intérieur selon la revendication 13, dont lesdits moyens de collecte de liquide de fuite comportent une rainure collectrice de liquide (52) et une cuvette (53) formée en surface supérieure dudit poids flottant (15) pour retenir et accumuler le liquide de commande provenant de fuites dudit vérin de levage (25), une buse d'aspiration (55) montée en position telle qu'elle baigne dans ladite cuvette (53) lorsque ledit poids flottant (15) est relevé en sa position supérieure et raccordé par une électrovanne (57) à un pot séparateur de liquide (58) maintenu en continu sous pression négative par une pompe à vide, un capteur (60) de détection de l'arrivée dudit poids flottant en sa position supérieure, et un dispositif de commande (56) agencé pour ouvrir l'électrovanne (57) en réponse à un signal de détection par ledit capteur (60).
